# EUROPEAN PATENT APPLICATION

(11) **EP 1 923 783 A1**
(43) Date of publication of application: **21.05.2008**
(21) Application number: 06255083.5
(22) Date of filing: 29.09.2006
(51) Int. Cl.: G06F 9/445, G06Q 10/00

(54) **Information processing system and related method**

(71) Applicant: British Telecommunications Public Limited Company, London EC1A 7AJ (GB)
(72) Inventor: The designation of the inventor has not yet been filed
(74) Representative: Williamson, Simeon Paul

(57) **Abstract**

Methods and systems for performing a plurality of different operations in relation to one or more of a plurality of items, each of said items having an item identification means associated therewith arranged to provide encoded item identification data relating to said item, said items also having an instruction means associated therewith arranged to provide instruction data, the system comprising receiving means arranged to receive instruction data from said instruction means associated with an item and item identification data from said item identification means associated with said item, and to make said instruction data and said item identification data available in an electronically-encoded form; and processing means arranged to select an operation from a plurality of different operations in dependence on said electronically-encoded instruction data and to perform said operation in relation to said item in dependence on said electronically-encoded item identification data.

## Description

### Technical Field

The present invention relates to methods and systems for performing operations in relation to items, the items having item identification means associated therewith arranged to provide item identification data relating to the items. In particular, but not exclusively, the present invention relates to such methods and systems wherein the item identification means are arranged to provide item identification data relating to the items in an electronically encoded form by means of radio-frequency communication or otherwise, and methods and systems wherein the item identification means are arranged to provide item identification data relating to the items in an optically encoded form by means of barcodes, 2-D codes, matrix-codes or otherwise.

### Background to the Invention and Prior Art

Radio-frequency Identification (RFID) technology essentially covers the transmission of object-related data from a tag to a reader using radio-frequency (RF) signals and then possibly onward over a communications network to computer applications and data repositories. RFID has been accepted as a means of allowing a new form of data capture from the physical environment, and has the potential to identify and track unique items (rather than product types) throughout their lifecycle. These items include consumer products, pallets, containers, vehicles, locations, animals and even people.

In the last few years, EPCglobal, a large industrial consortium, has developed EPCglobal Network^{™} as the de-facto RFID standard. The main vision is a secure open platform with the objective of driving adoption of low-cost passive RFID technology.

EPCglobal Network standardizes an architecture for using RFID tag technology in the global supply chain by using inexpensive RFID tags and readers to pass unique tag identifiers to middleware components and higher level applications. The EPC network uses Internet technology to create a network for sharing that information among authorized trading partners in the global supply chain.

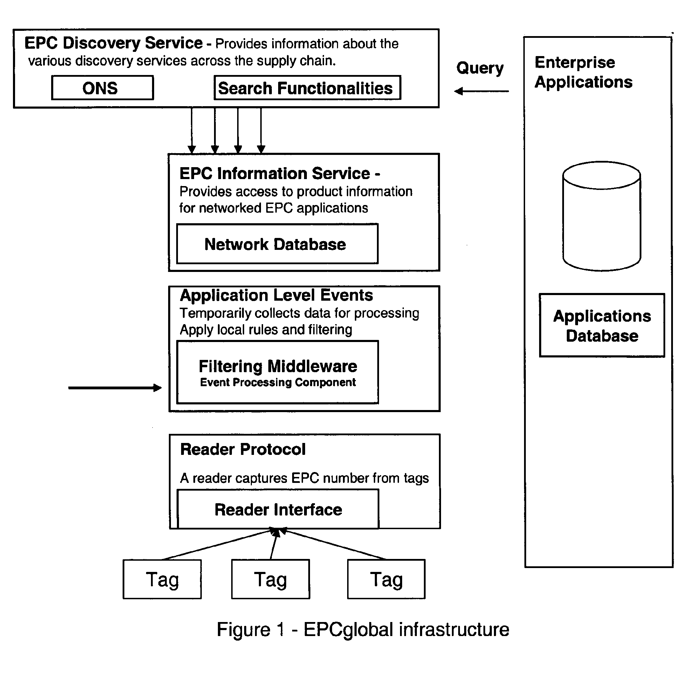

An EPCglobal Network is composed by the following features (Figure 1 shows the current EPCglobal architecture):
EPC (Electronic Product Code) number: The EPC is a globally unique identifier. It may contain information such as a manufacturer ID, a product code and a serial number. The EPC number is contained in the memory of the tag.
RFID Reader: A reader communicates with tags via RF signals. A reader captures the EPC number from the tags and may then deliver it to a local information system (local middleware). Next generation readers will be able to capture a large set of data events from tags and sensors.
Application Level Events: Local middleware, or in some cases more capable readers, process reader events before constructing and sending more meaningful application events. This processing consists of filtering, cleaning and aggregation functions and the mark-up of additional information obtained from other systems (such as the Object Naming Service (ONS) or local databases). It also provides an interface for communication to applications for real-time business response, or storage and availability through the EPC Information Services (EPC-lS), which is a repository of RFID Events based on standards from EPCglobal. The middleware generally applies three stages: collect and temporarily store event data; perform processing on event data; notify a specific application when an application level event is constructed.
EPC-lS (EPC Information Services): EPC-lS provides an interface that enables exchange of EPC information across the EPCglobal Network and different EPC-lS systems. An EPC-IS also provides an interface to query RFID event information on attributes such as time-stamps, item level information, item location etc.
EPC-DS (EPC Discovery Services): EPC-DS enables end-users to find data related to specific items and to request information about these items. The EPC-DS is a distributed or centralized network service that enables EPC queries to be redirected towards the correct EPC-lS interface. A main component of the discovery service is the ONS, which provides a global look-up service. The ONS is structured hierarchically in a similar manner to the Domain Name System (DNS), with a single root authority and localised servers and caches.

It should be noted that most of today's implementations are proprietary closed systems. RFID components and platforms are application-specific and solutions are vertically integrated. However it is important to consider that the EPC components have been replicated in most of current solutions even if the standard EPC interface has not been fully implemented.

Generally, an Application Level Events middleware component receives information from a network of RFID readers. These readers collect data at a high rate from many different tagged sources such as items, pallets, etc. This information will contain some meaningful events but also much information of little or no relevance. For example the captured information could include duplicate information, misreadings or information with no applications ready to listen to it. In order to manage this data, an appropriate filtering mechanism is required that can handle a large amount of information but that can also understand the context in which this information has been generated or read. These filtering mechanisms are stored and enacted in the "event processing" component. The processing and construction of the Application Level Event (ALE) is performed at the specific behest of an application via the standardised ALE interface. A key part of an RFID infrastructure is the "event processing" module that processes the EPC events generated from the readers. Although the EPCglobal ALE standard specifies only limited operations that the application is allowed to request, other proposals for event processing middleware, such as the ObjectWeb Open Source Consortium, propose a general purpose OSGi applications platform.

RFID readers are known that can process hundreds of tags per second. A local middleware application may have to process hundreds up to tens of thousands of RFID events per second. Companies such as ConnecTerra (see http://www.connecterra.com/) and OATSystems (see http://www.oatsystems.com/) have developed powerful middleware applications that will interface with current RFID standards. These systems have been optimized for speed but they cannot support highly transient RFID services.

In such systems, ALE middleware may capture real-time read information from the RFID readers and provides a refined output event to the applications. The ALE middleware may also provide a storage function for RFID events and create a degree of separation between the application and the raw events generated by RFID readers. In this way applications need only to implement a single interface to the RFID system. New types of readers may be added to the system. All the intelligence to process RFID raw information for a specific application is left to the event processing module within the ALE middleware.

The event processing modules have both an input stream and an output stream. The input stream consists of events that have been generated by the RFID readers and events contained in the local databases. The output streams consist of any event processed by the local module and ready to be transferred to the output of the ALE interface and waiting applications. The kind of processing that can occur in current solutions is defined by the application and what the application wants to do with the event data. An event processing module executes a well specified set of operations against streams of RFID event information. These operations could be counting, aggregating, filtering, sorting, erasing and fetching information from a specific database. A user could define these event processing modules by specifying an XML description file that invokes a sequence of processing operations. Solutions based on the EPCglobal ALE standard could support hundreds of simple event processing modules working in parallel.

An example could be a storage centre with an RFID reader that reads tags on the arrival of specific products. When the reading information is passed to the ALE middleware this information is filtered and aggregated to construct receipt information. The local event processing module can fetch specific product information related to the product identifiers, contained in local or remote databases. Such data might be used to count the number of items of a specific colour, for example. The receipt event can also contain the identifier of the relevant purchase order, or information about the integrity or authenticity of the product. The receipt event is then distributed to various local applications through the ALE output interface and made available globally through an EPC-lS.

In Figure 2 the ALE middleware is illustrated with the event processing modules. The local datastore contains different event processing modules to create different application level events. In a simple case, the processing modules (which may be as simple as XML processing rules) are downloaded to the ALE middleware by an application or systems administrator. It should be noted that an ALE middleware can support multiple applications (and therefore processing modules) simultaneously.

Figure 3 indicates how an RFID infrastructure may support the collection of RFID data.

The process may proceed as follows:
A) An event processing module for an application (e.g. Application-1) is uploaded in the local database.
B) At a request from a local user application (e.g. Application-1) the event processing module is uploaded in the ALE middleware component. The ALE middleware can now process events for Application-1.
C) The RFID reader reads product identifier information and passes it to the ALE component.
D) The ALE middleware processes the read information and it generates a specific event for Application-1.

Most of today's implementations of middleware and event processing modules are static systems. These components provide high performance in terms of speed in handling a large number of events but cannot be easily reconfigured to incorporate new functionality. New or transient applications that require different processing capabilities to those already supported by the reader's ALE middleware are not easily supported, especially where the application and ALE middleware are located in or controlled by different organisations. This is recognised by the inventors as a fundamental problem of existing systems.

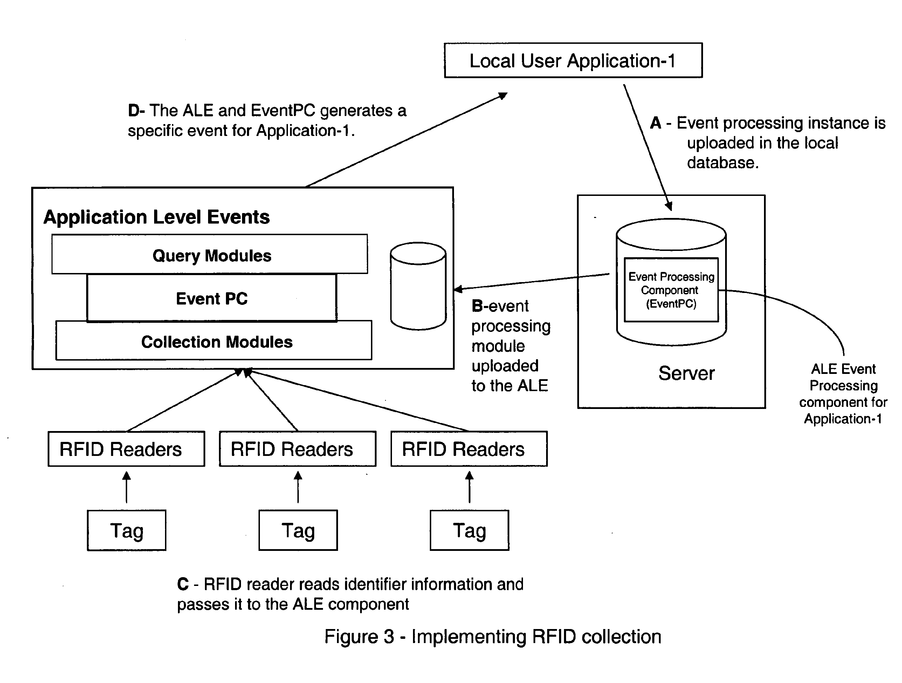

In contrast to the situation with existing systems, it will be understood that the inventors have recognised that applications may in the future be more widely distributed and that the operation to be performed by a specific system should not need to be predetermined. This would allow processing to be more dynamic and reactive to the local environment. As will be understood, in preferred embodiments of the invention, an RFID platform similar to the one explained in relation to Figure 3 may be accessible using an open protocol (e.g. EPCglobal standard) and multiple remote applications may be supported.

### Summary of the Invention

According to the present invention, there is provided an information processing system as set out in the appended claim 1.

Also according to the present invention, there is provided a method as set out in the appended claim 21.

Preferred embodiments of the invention are capable of resolving problems surrounding the prior art by allowing for a mechanism to be provided that enables the choice of different event processing mechanisms to be selected by additional information contained in what we will refer to as a contextual, or "context" tag. This contextual information (from the contextual tag(s)), which may relate to physical or local characteristics, may be combined with requests of the applications and information associated with an object identifier to determine a course of action to be taken by an event processing module.

Preferred embodiments of the present invention differ from prior art schemes described above since they remove the need for the types of processing to be performed by ALE middleware and Event Processing Modules to be set purely by the reading of product identifiers and associated information from datastores. Instead the action can be chosen in conjunction with one or more "context tags". This allows the processing to be more dynamic and reactive to the local environment.

Any action to be performed by ALE middleware may be controlled by an external application. The application may use the ALE interface to define the event that it is interested in receiving. A further challenge may involve how to define suitable processing mechanisms and identify a specific application event that depends on other reader events and associated information (for example: location of the reader, temperature of the environment, type of product).

As an example, in a product authentication scheme, once an item identifier has been collected, it can be processed according to the type of authentication service defined by the application. A product pedigree can be checked to verify that the product is original. If the identifier is encrypted, an appropriate decryption mechanism could be applied to obtain the real identifier. In the case that the product authentication fails, the system can raise an alarm to stop the item progressing further in the supply chain or can require immediate manual assistance. All these functions might be applied by a suitably capable event processing module.

It will be understood that embodiments of the invention may also be of importance in relation to non-RFID applications. Current distributed systems have evolved an architecture whose edges consist of numerous data collection points such as sensor networks and RFID tags/readers and whose interior nodes consist of traditional applications. Traditionally, this type of architecture has been deployed using a vertical fully-integrated approach. A reader-specific protocol is used to collect information from sensors or tags. A predefined separate event processing module with an appropriate middleware is used to capture and route these events towards applications and databases. A specific database and one or more applications are set up to collect and listen to these events. The result is that deployment of this sensor technology has been costly inflexible and difficult.

According to preferred embodiments of the present invention the processing performed by the ALE middleware and Event Processing Modules are not set purely by the reading of product identifiers and associated information from datastores. The action is chosen in conjunction with one or more context tags. This allows the processing to be more dynamic and reactive to the local environment. For example, a context tag can control which processing module is loaded into the ALE middleware to process data from product RFID tags. The processing module can be contained in remote-datastores and can serve the needs of remote applications.

Preferred embodiments of the invention relate to methods and systems that may remove the reliance on installing set processing for local applications. For example, the location of the event processing module, and the operation to be performed in relation to product RFID tags can be derived from context identifiers that are read from the local physical environment. The provision of context identifiers in local physical surroundings allows the ALE middleware and Event Processing Modules to be customised in dependence on the physical context in which the product identifier is read.

The context tag itself may be an identifier used to look up and incorporate additional functionality into the ALE middleware modules, or may itself contain such functionality in the form of a programming language, script, or parameter information. Context tags may take the form of one or more RFID tags, barcode labels on a product, a 2-D or "matrix" codes (i.e. similar to a barcode, but with information encoded using a two-dimensional layout or matrix of markings), identifiers in the vicinity, attached for example to a shelf on which the product is stored, or a more complex tag that includes an identifier but that can also sense local information (e.g. temperature, position, vibration, etc.). In some cases, a combination of different types of context tag may be used in relation to the same item.

The process according to a preferred embodiment of the invention may involve:
a) Reading two or more data tags, at least one of which is the product identifier, and one or more provides context information
b) Using context identifiers to resolve which event processing module, or which functionality within an existing module, needs to be installed in the ALE middleware component. The ALE middleware can now process events for the dynamic contextual application.
c) Processing the data from the product identifier RFID tags through the newly installed processing functionality (and other existing modules)

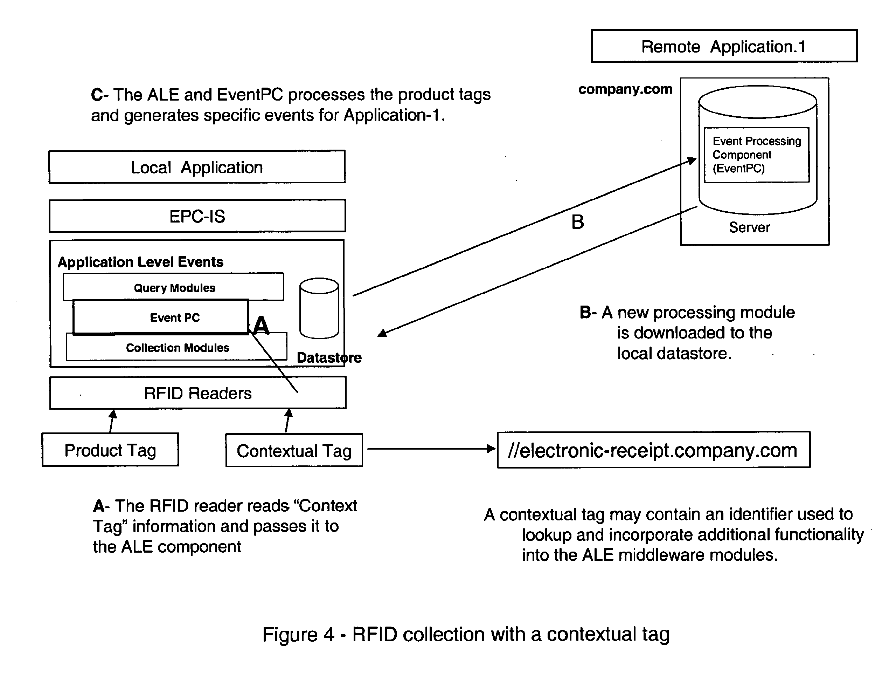

An example of how step (b) above can be performed is given below, with reference to Figure 4. In this implementation the context information is an identifier that represents a network address of an Event Processing Module held in a remote datastore.
b1) Look up the context identifier on the appropriate remote datastore. The datastore contains different event processing modules to create different application level events.
b2) Download the identified processing module to the local ALE middleware. (The processing module may simply be an XML file with few processing rules.)
b3) Use the processing module to support a specific application. When the processing module is uploaded the ALE middleware can generate specific events for the application.

In this example the context tags act to determine the location of a processing module for specific applications. We could expect a more advanced implementation where the context tags provide additional input for the selection or operation of the ALE module functionality. For example a context tag can provide temperature information for a palette of milk cartons that determines the operation to be performed when reading the product identifiers on the milk cartons. Below a threshold a routine inventory management operation may be performed, while above the threshold, a recall operation may be raised.

The context information may need to be understood by a collection of systems. This could be multiple systems within a single enterprise or distributed systems across a collaborative supply chain. A preferred option is for a context tag to be globally meaningful (such as an IP address or URL). A context tag acts as a reference to processing functionality in a specific datastore. We can imagine that more than one identifier can be used to select functionality to be performed in conjunction or as parallel activities. For example, one context identifier may select the main general module, whereas another may be used to install more specific rules or decision parameters.

As explained above, the context information may not only contain an identifier, but may also contain a script language. The ALE middleware will execute the script language on the context tag(s) using the product identifier as a variable. This allows flexible context control of the ALE operation without the use of the remote datastore to install the appropriate event processing module.

We can see that a context identifier may:
A) Be a reference used to look up and incorporate an additional module into the ALE middleware
B) Be a reference used to install specific functionality into a module, such as a processing policy
C) Specify the operation that is to be performed through a locally understood operation code, or through a script language. The functionality will then be uploaded directly into the ALE middleware.
D) Provide input into the selection of the remote module or functionality to determine which ALE operation must be performed. In this case the context tag may be an identifier in connection with a sensor device.
E) Provide a locally understood context parameter to a module within the ALE middleware. This might be a phone number or identifier of a person to contact, or local sensor data.

In each case, the context tag can contain the information required, or an identifier that can be used as a reference to resolve to the required information. Where identifiers are used these can be resolved using default methods (such as using the DNS to resolve a URL).

Another implementation can use context identifiers as additional inputs to control the actions of existing processing modules. For example a context tag can be used to inform an authentication processing component of the correct key authority for checking the authenticity of the product tags. Another more localised example may be a local context tag carried by a person in the vicinity of the RFID reader. When an ALE authentication module processes a product RFID tag that fails the authenticity checks, the action taken depends on the presence and identity of the operator in the vicinity.

Embodiments of the invention may be of importance in the evolution of distributed systems data acquisition and sensor technologies. A principal advantage may be that the action to be performed in relation to product identifiers need not be predetermined by an application or system administrator. This may have advantages in terms of scalability, flexibility, dynamic adaptability and security.

Scalability: Processing information need not all contained in the same local datastore but may be distributed and shared across different datastores or product information servers through additional context tags. This allows scalability to be managed both on the network traffic and on the servers on which the queries are performed.
Flexibility: Defining new applications may be made easier. If there is a requirement to introduce new applications to the middleware, it may only be necessary to define a new context identifier. As products travel across the supply chain various systems may then be updated with the new application information.
Dynamic Adaptability: Uploading and deleting the processing module may be made easier. A system may adaptively upload a specific event processing module only when it is required. The context tag may also reference a specific policy that defines the validity of the processing (e.g. 1-day, 1-week, etc).
Security: The context tags can present information that is required to perform operations on the product identifiers. For example, the key authority reference to access or decode secure tags or an authorisation to update an inventory system.

### Brief Description of the Drawings

Preferred embodiments of the present invention will now be described with reference to the appended drawings, in which:
Figure 1 shows the EPCglobal infrastructure;

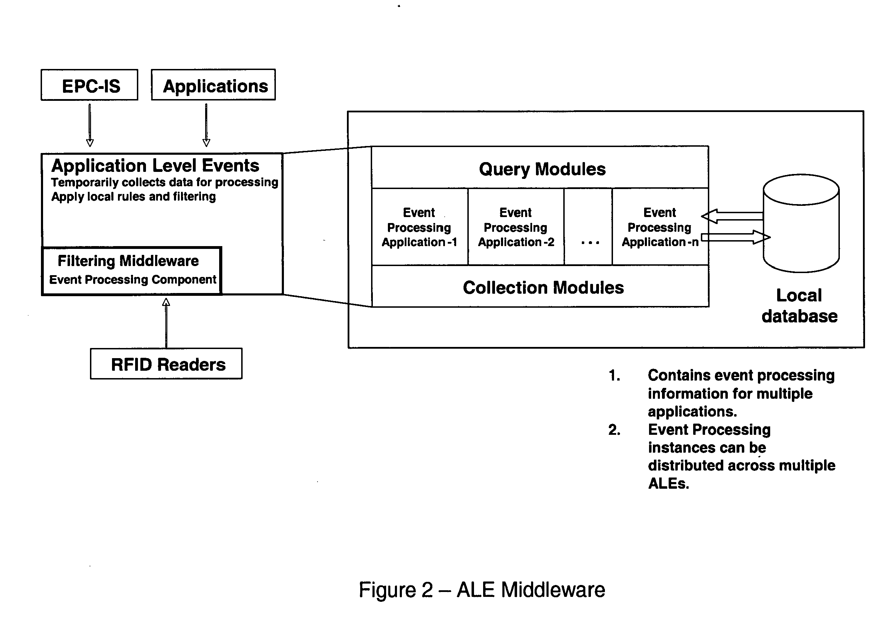

Figure 2 illustrates a possible structure for ALE Middleware;
Figure 3 illustrates how a possible RFID infrastructure can support the collection of RFID data;
Figure 4 illustrates how RFID data may be collected with a context tag according to a preferred embodiment of the invention;

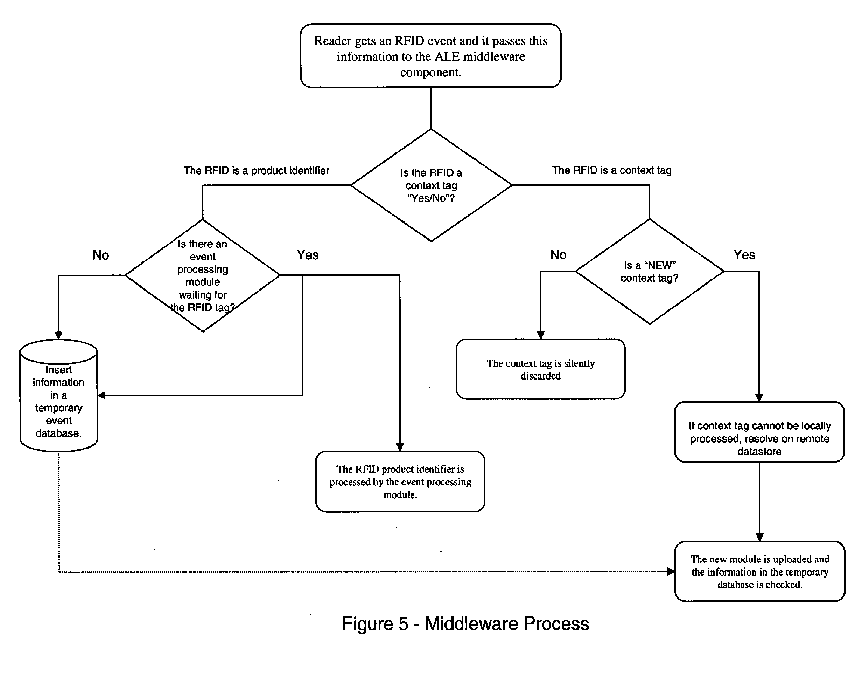

Figure 5 illustrates the middleware process that may be performed;

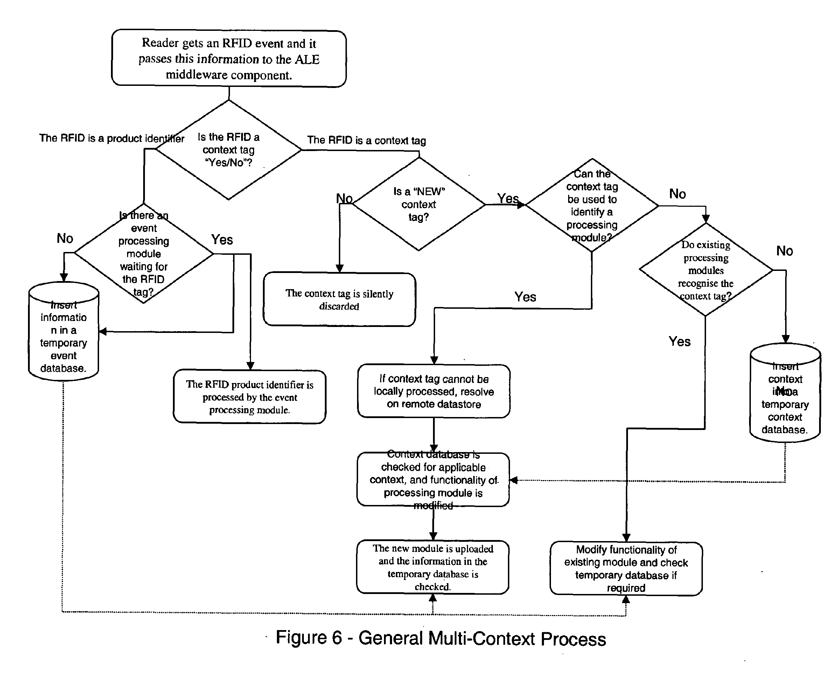

Figure 6 illustrates the process that may be performed when multiple context tags are used in accordance with a preferred embodiment of the invention.

### Description of the Embodiments

Preferred embodiments of the invention relating to RFID systems will now be described in more detail with reference to the appended drawings. These make use of additional tags which will be referred to as "context tags". In general, the context tags are used in conjunction with RFID product tags attached to objects to control or affect the collection of RFID events by providing instruction data indicative of an appropriate operation to be performed.

Any series of RFID events that is being collected by an information system will be handled by an event processing module within an ALE middleware component. Different RFID events may be captured following the detection of one or more context tags. Context tags can control the event processing module, and allow a virtual separation between system functions and collection functions. The system functions may be defined locally (e.g. reader set-up, reading range, database interfaces, etc.) while the collection functions may be determined by event processing modules defined by the context tags.

We now describe two specific scenarios that illustrate the function of a context tag.

### Scenario A: An Electronic Receipt Scenario

Scenario A relates to a situation where a Distribution Centre (DC) system is integrated within a supply chain system that supports the EPCglobal architecture. A remote user such as the manufacturer wishes to monitor and track the movement of goods at different stages of the supply chain process. In this case the user would like to know how many products arrive in the distribution centre on a particular day. Unfortunately, the DC system does not have in place any process to capture the RFID tag information from tags associated with the user's goods. This is a normal situation with the current infrastructure. If no application is in place to listen to RFID tag information, the system will not capture the relevant information and it will silently discard it. Context tags may be used resolve this issue. When the user's goods arrive at the distribution centre, by scanning the context tag the DC system can be automatically updated with a specific event processing module that can handle the RFID tag information from tags associated with the user's products.

In this case the event processing module and the construction of the Application Level Event is performed because of the presence of the context tag. The ALE middleware is installed and performs processing that produces a receipt notice at the distribution centre and passes this note to the manufacturer.

This approach differs from a traditional inventory and track-and-trace system. In this case the user need not have any predetermined agreement with the distribution centre and the action is not predetermined by an application loading a processing module onto specific ALE middleware locations. The processing mechanism and application event depend on other contextual information read by the RFID reader (in reading a context tag). The context tag allows initiation of the installation and operation of this process and the user may then be notified when the products arrive at the distribution centre.

### Specific Step-by-Step Middleware Process for Electronic Receipt Scenario

This process functionality will now be described with reference to Figure 5.
(1) An RFID reader is associated with a specific location in a Distribution Centre. The reader collects information about the product on arrival. The product identifier (RFID EPC) is associated with the reader identifier and submitted to the event processing module in the ALE middleware. The reader also collects information from any context tags present.
(2) The ALE middleware receives a stream of product identifier information:
   The event processing module checks if an application request has set an appropriate event processing module to handle the specific RFID product identifier. For example, an application may be waiting to be notified when RFID 1745.1453.1234.5675 is seen. If "yes" the product identifier is sent to each interested processing module where it is processed to create a business event.
   Even if no current processing modules are interested in the product identifier, the identifier may be placed in a temporary event database. This allows for context tags to be processed and processing modules to be installed even after the reading of some or all of the product identifiers.
   If a context tag is read, the ALE will resolve which event processing module if any needs to be uploaded in the ALE middleware component. The context tag may specify the middleware component through a remote reference, or an operation code, script or parameter.
   If no new processing modules are installed as a result of context tags, then after a specified time-out the data may be discarded from the event database. It is important to notice that if a context tag is read multiple times, the system will ignore the information if the event processing module is already updated in the ALE middleware.
(3) On loading a new processing module, the temporary event database may be replayed to the new module, along with any new product identifiers read after loading the module. The stream of RFID product identifiers is processed by the event processing module and a dataset of business events is created. For example the process can append purchase order and product data to aggregated read events to construct a single electronic receipt.

### Context Tag definition

The context tag may contain information required to install the processing module locally (e.g. a script, operation code or parameter), or an identifier that can be resolved remotely (e.g. a URL). The ALE middleware uses a specific engine to manage the creation and destruction of event processing modules that are defined through the use of a context tag. It is also important to notice that a context tag can be used in conjunction with other context tags. For example one context tag may contain a reference to a specific event processing module, and another context tag may provide additional inputs to control the actions of the processing module once loaded.

Three possibilities will briefly be discussed:
(i) The context tag can be an identifier used to look up and incorporate additional event processing modules or additional functionalities into the ALE middleware component.
   The implementation is similar in concept to the use of Universal Naming ldentifiers, such as URLs for website pages. In the context tag URL, we have a server part that allows an understanding of where the additional information for the ALE is stored. The server part of the address may be resolved by the global DNS scheme, unless an IP address is specified directly. For example an identifier could be "//electronic-receipt.company.com". The URL also includes an operation part, that specifies the operation to be installed into the ALE middleware.
(ii) The context tag may be arranged to specify the operation that is to be performed through a predefined operation code understood by the ALE middleware, or through a script language. In this case the additional functionality may be directly implemented without requiring any remote resolution.
   For example we could have a simple XML file to define the event processing module, as follows:
   Electronic-Receipt Definition

   ```
        <? xml version='1.0' ?>
  
        <ValiditySpecs>
          <startTime> 01-01-2006 </startTime>
          <endTime> 31-12-2006 </endTime>
        </ValiditySpecs>
  
        < Electronic-ReceiptSpecs>
  
        < Electronic-Receipt reportName: Electronic-Receipt.date>
  
        <LocationSpecs>
         <Addresslnclude> Include.Company.address </Addressinclude>
        </LocationSpecs>
  
        <DateSpecs>
         <Dateinclude> Include.Date </Datelnclude>
        </DateSpecs>
  
        <filterspec>
        <IncIudeRFIDRange>urn:epcatgin-96:1543.1253.1234.' <\IncludeRFIDRange>
        <\filterSpec>
  
        <Productlnformation>
        <IncludeProductlnfo> tag.number, tag.product <\IncludeProductlnfo>
        <\Productinformation>
        < \Electronic-Receiptspecs>
```
(iii) The context tag may be an active device that carries an identifier in connection with a sensor device. In this case the information contained in the context tag will be exploited to define which event processing functionality should be operated. The context performs in a similar way as we have discussed in the two examples above.

### Scenario B: Product Authentication Scenario

In this scenario we focus on how embodiments of the invention may work when multiple context tags are used. Product authentication in supply chains provides great opportunities for fighting illicit trade by allowing detection of counterfeit or grey market products. Product authentication can be based on transponder authentication or by additional reasoning using online product information. In this scenario we assume use of an access-protected RFID tag. For example, the tag contains different secrets and we can check if the tag knows these secrets by a cryptographic challenge-response protocol.

One of the main obstacles for product authentication relates to how an RFID system can recognize the security scheme implemented in a tag. At the moment many proprietary solutions require a specific reader/RFID system to read a secure tag. This is due to the lack of a standard security scheme. Many vendors have preferred a proprietary approach to have an early solution ready for the market. It is important to note that if an RFID system is not able to identify which security protocol is applied to a tag then the RFID system will not be able to communicate with the tag. A context tag can be used to identify which security protocol a tag is using and the ALE can resolve which event processing module needs to be uploaded in the ALE middleware component.

A second obstacle relates to key management. Normally a secure tag is protected by a secure key that prevents malicious users from getting access to a tag's secret identifier. This key is required by the RFID system to get access to the tag identifier. Unfortunately this key may be stored in a remote location (i.e. a remote database) and in most cases it is not associated with the entity that specifies the security protocol. Again if an RFID system is not able to identify which security key is applied to a tag then the RFID system will not be able to communicate with the tag. In the present scheme, another context tag can be used that specifies where the key can be obtained. Further context tags might also be used to specify which operation is to be conducted when a product tag fails an authentication check. In this example, the context tag may contain the email address, phone number, or unique personal identity used to contact an appropriate person.

### Specific Step-by-Step Middleware Process for Product Authentication Scenario

This process functionality will now be described with reference to Figure 6. Four context tags are used in this approach. In this scenario it will be assumed that a pharmacy needs to make sure that drugs at arrival are original and have not been counterfeited.
(1) A reader is associated with a specific location in a pharmacy. The RFID reader collects the product identifiers. The product identifier (RFID number) is associated with the reader identifier and submitted to the ALE middleware for processing by the event processing modules. The reader also collects information about context tags in the vicinity.
(2) The ALE middleware receives a stream of RFID tag product identifiers.
   In our example the ALE will also receive four context tags:
   a. An application context tag that will provide to the ALE the reference to an event processing module for a product authentication application. The ALE will resolve which event processing module needs to be uploaded in the ALE middleware component.
   b. A specific security protocol tag. In this case the context identifier is used to inform the product authentication module of the correct security protocol for checking the authenticity of the drug delivered to the pharmacy. Again, the ALE would resolve the context and define which protocol processing capability needs to be uploaded into the authentication event processing module.
   c. A key authority tag. In this case a context tag can be used to inform the authentication processing component of the correct key authority for checking the authenticity of the product tags.
   d. A contact identifier. In this case the authentication processing module will recognise and use the contact information in the case that a product fails the authentication check.
(3) The stream of RFID tag product identifiers is processed by the product authentication module. When an RFID product number arrives at the event processing module the number is decoded with the correct protocol and the correct secret key. If the tag is authentic, the process can generate an electronic receipt that can be used as pedigree information. If the tag is not authentic an alarm may be triggered to the specified contact and the product could be removed from the pharmacy.

### Summary

Embodiments of the invention have been described principally in relation to RFID tags. Neither the context tag nor any related identifiers need to be implemented in RFID tags. As discussed above, they can instead be barcodes, identifiers embedded in equipment memory, or any other local identifier mechanism.

Furthermore, embodiments of the invention have been described in relation to an RFID system architecture derived from the EPCglobal standard. However, embodiments of the invention may present the similar or corresponding benefits in relation to other proprietary implementations and in various sensor network implementations.

In summary, embodiments of the invention may serve multiple purposes, including allowing the following:
- contextual resolution of information based upon the reader, surroundings etc.
- control of information access restricted by contextual information.
- the capability to expose an RFID system to various applications without requiring a pre-configuration operation.
- the distribution of processing information. Processing information need not all be contained in the same local datastore but can be distributed across different datastores

## Claims

1. An information processing system for performing a plurality of different operations in relation to one or more of a plurality of items, each of said items having an item identification means associated therewith arranged to provide encoded item identification data relating to said item, said items also having an instruction means associated therewith arranged to provide instruction data; said information system comprising:
receiving means arranged to receive instruction data from said instruction means associated with an item and item identification data from said item identification means associated with said item, and to make said instruction data and said item identification data available in an electronically-encoded form; and
processing means arranged to select an operation from a plurality of different operations in dependence on said electronically-encoded instruction data and to perform said operation in relation to said item in dependence on said electronically-encoded item identification data.

2. An information processing system according to claim 1 wherein said item identification means is arranged to provide electronically encoded item identification data relating to said item.

3. An information processing system according to claim 1 or 2 wherein said item identification means is arranged to provide item identification data by means of radio-frequency communication.

4. An information processing system according to claim 3 wherein said item identification means comprises an RFID tag.

5. An information processing system according to claim 4 wherein said item identification means comprises a passive RFID tag.

6. An information processing system according to any of the preceding claims wherein said item identification means is arranged to provide item identification data in an optically-encoded form

7. An information processing system according to claim 6 wherein said item identification means comprises a barcode or a 2-D code.

8. An information processing system according to any of the preceding claims wherein said instruction means is arranged to provide electronically encoded instruction data.

9. An information processing system according to any of the preceding claims wherein said instruction means is arranged to provide instruction data by means of radio-frequency communication.

10. An information processing system according to claim 9 wherein said instruction means comprises an RFID tag.

11. An information processing system according to claim 10 wherein said instruction means comprises a passive RFID tag.

12. An information processing system according to claim 10 wherein said instruction means comprises an active RFID tag.

13. An information processing system according to any of the preceding claims wherein said instruction means is arranged to provide instruction data in an optically-encoded form.

14. An information processing system according to claim 13 wherein said instruction means comprises a barcode or a 2-D code.

15. An information processing system according to any of the preceding claims wherein said instruction means comprises a wireless memory chip.

16. An information processing system according to any of the preceding claims wherein one or more of said items have a plurality of instruction means associated therewith, each arranged to provide instruction data, and wherein said processing means is arranged to select said operation in dependence on the instruction data received from each of said instruction means with which said item is associated.

17. An information processing system according to any of the preceding claims wherein said receiving means comprises a radio-frequency communications reader.

18. An information processing system according to any of the preceding claims wherein said receiving means comprises an optical reader.

19. An information processing system according to any of the preceding claims wherein said processing means is arranged to select one from a plurality of remote data sources to which said information processing system is operatively linked, said selection being made in dependence on said instruction data, and to consult a data source so-selected in order to derive information relating to said item in dependence on said item identification data.

20. An information processing system according to any of the preceding claims wherein said processing means is arranged to select an operation from a plurality of different operations including any or all of: consulting one or more remote data sources in order to derive information relating to said item; providing information relating to said item to applications, systems or persons; instigating a physical action in relation to said item; and updating said item identification data relating to said item.

21. A method of performing one or more of a plurality of different operations in relation to one or more of a plurality of items, each of said items having an item identification means associated therewith arranged to provide encoded item identification data relating to said item, said items also having an instruction means associated therewith arranged to provide instruction data; said method comprising the steps of:
receiving instruction data from said instruction means associated with an item and item identification data from said item identification means associated with said item, and making said instruction data and said item identification data available in an electronically-encoded form;
selecting an operation from a plurality of different operations in dependence on said electronically-encoded instruction data; and
performing said operation in relation to said item in dependence on said electronically-encoded item identification data.
